# EUROPÄISCHE PATENTSCHRIFT

(11) **EP 4 029 760 B1**
(45) Veröffentlichungstag und Bekanntmachung des Hinweises auf die Patenterteilung: **03.04.2024**
(21) Anmeldenummer: 22151304.7
(22) Anmeldetag: 13.01.2022
(51) Int. Cl.: B62D 1/184

(54) **LENKSÄULEN-ANORDNUNG FÜR EIN FAHRZEUG**
STEERING COLUMN ASSEMBLY FOR A VEHICLE
AGENCEMENT DE COLONNE DE DIRECTION POUR UN VÉHICULE

(30) Priorität: 15.01.2021 DE 102021100785
(43) Veröffentlichungstag der Anmeldung: 20.07.2022
(73) Patentinhaber: Jungheinrich Aktiengesellschaft, 22047 Hamburg (DE)
(72) Erfinder: Pongratz, Kurt, 84144 Geisenhausen (DE); Beierkuhnlein, Marco, 85368 Wang (DE)
(74) Vertreter: Weickmann & Weickmann PartmbB

(56) Entgegenhaltungen:
- DE-A1- 10 260 523
- JP-A- 2003 341 527
- JP-A- 2012 030 785
- US-A1- 2015 239 489
- US-A1- 2018 297 625
- US-A1- 2019 126 970
- US-A1- 2021 009 191

## Beschreibung

Die vorliegende Erfindung betrifft eine Lenksäulen-Anordnung für ein Fahrzeug, insbesondere ein Flurförderzeug, sowie ein Fahrzeug, insbesondere ein Flurförderzeug, welches eine derartige Lenksäulen-Anordnung umfasst.

in unterschiedlichen Typen von Fahrzeugen und insbesondere in elektrisch oder verbrennungsmotorisch betriebenen Flurförderzeugen, beispielsweise Gabelstaplern mit elektrischer oder hydraulischer Lenkung, sind bisher Lenksäulen-Anordnungen eingesetzt worden, welche aufwendig aus einer Mehrzahl von Schweißbaugruppen aufgebaut waren. Hierbei lassen sich diese Lenksäulen bezüglich eines Fahrersitzes in der Regel lediglich in ihrer Höhe verstellen oder hinsichtlich ihres Neigungswinkels gegenüber der Vertikalen, um unterschiedlichen Fahrern des entsprechenden Fahrzeugs jeweils eine individuelle Anpassung ihres Arbeitsplatzes zu erlauben.

Derartige Lenksäulen-Anordnungen aus dem Stand der Technik sind aufgrund ihres aufwendigen Aufbaus daher jedoch relativ teuer und dadurch, dass sie lediglich um eine horizontal verlaufende Achse neigbar sowie hinsichtlich ihrer Höhe verstellbar sind, auch nicht sonderlich flexibel bei der Anpassung auf individuelle Fahrer solcher Fahrzeuge. Hierbei wirkt sich insbesondere die fehlende Möglichkeit, eine Verstellung der Position des Lenkrads in Querrichtung des Fahrzeugs vorzunehmen, negativ aus, da eine solche Einstellung häufig für eine optimale anatomische Ausrichtung des Lenkrads zu der Fahrerplatzposition wünschenswert wäre.

Beispiele für derartige Lenksäulen-Anordnungen sind beispielsweise aus der US 2015/239 489 A1 und der JP 2012-030 785 A bekannt.

Des Weiteren besteht durch die Notwendigkeit des Einsatzes von Teleskoprohren zur Einstellung der Länge der Lenksäule und damit der Höhe des Lenkrads ein erhöhter Wartungsbedarf für die entsprechenden Anordnungen.

Es ist somit die Aufgabe der vorliegenden Erfindung, eine einfach aufgebaute Lenksäulen-Anordnung bereitzustellen, welche sich neben ihren verringerten Kosten und einem ebenfalls verringerten Wartungsbedarf ferner dadurch auszeichnet, dass eine verbesserte Einstellbarkeit davon vorliegt und damit eine optimale ergonomische Anpassung des Fahrerplatzes auf individuelle Fahrer solcher Fahrzeuge möglich wird.

Zu diesem Zweck umfasst die erfindungsgemäße Lenksäulen-Anordnung eine Lenksäule mit einem daran vorgesehenen Lenkrad, welche einen im Wesentlichen kreisförmigen Querschnitt und wenigstens eine durch den gesamten Querschnitt verlaufende Durchbrechung aufweist, einen Lagerbock zur Anbindung der Lenksäule an den Fahrzeugkörper des Fahrzeugs, welcher zwei einander gegenüberliegende Durchbrechungen aufweist, einen Lagerbolzen, welcher in einem montierten Zustand der Lenksäulen-Anordnung durch die Durchbrechungen des Lagerbocks und durch die Durchbrechung der Lenksäule hindurchgeführt und mittels Fixiermitteln festgesetzt ist, und eine Spannvorrichtung, welche dazu eingerichtet und angeordnet ist, in einem angezogenen Zustand eine Klemmkraft durch den Lagerbock auf die Lenksäule hervorzurufen, wobei die Durchbrechung der Lenksäule in Umfangsrichtung davon eine größere Abmessung aufweist als der Durchmesser des Lagerbolzens in dem Bereich, in welchem er in dem montierten Zustand in der Durchbrechung der Lenksäule einliegt.

Durch die Merkmale der erfindungsgemäßen Lenksäulen-Anordnung kann eine Verdrehbarkeit der Lenksäule gegenüber dem Lagerbock um ihre Längsachse gemäß der Abmessungen der Durchbrechung da hindurch erzielt werden. Da in einer Weiterbildung der Erfindung an der Oberseite der Lenksäule ferner ein Vorbau vorgesehen sein kann, welcher das Lenkrad in einer von einer Längsachse der Lenksäule versetzten Weise trägt, kann somit durch eine derartige Verdrehung eine Verlagerung des Lenkrads auf einer kreisförmigen Bahn um die genannte Längsachse herum erzielt werden, was einen zusätzlichen Freiheitsgrad für die Einstellung der Position des Lenkrads darstellt. Allerdings kann die vorliegende Erfindung auch in Ausführungsformen eingesetzt werden, in welchen das Lenkrad konzentrisch mit der Lenksäule angeordnet ist, sofern durch die Verdrehung davon andere ergonomische Vorteile erzielt werden können, beispielsweise weitere mit der Lenksäule gekoppelte Anbaukomponenten an geeignetere Positionen verschwenkt werden können.

Ferner ist der Aufbau der erfindungsgemäßen Lenksäulen-Anordnung gegenüber den oben beschriebenen Vorrichtungen aus dem Stand der Technik deutlich vereinfacht, sodass eine Kostenreduzierung und ein verringerter Wartungsaufwand erzielt werden kann. Indem ferner in einer Weiterbildung die Durchbrechung der Lenksäule in Längsrichtung davon eine größere Abmessung aufweist als der Durchmesser des Lagerbolzens in dem Bereich, in welchem er in montiertem Zustand in der Durchbrechung der Lenksäule einliegt, kann ferner eine Verlagerbarkeit der Lenksäule und damit des Lenkrads entlang ihrer Längsachse erzielt werden.

Hierbei versteht es sich, dass die Durchbrechung der Lenksäule nicht im strengen Wortsinne als Langloch aufgefasst werden kann, da sie eine Verstellung der Lenksäule gemäß zwei Freiheitsgraden erlaubt, zum einen entlang ihrer Längsachse und zum anderen eine Rotation um ihre Lenkachse herum. Jedoch kann auf bei Langlöchern übliche Ausgestaltungen zurückgegriffen werden, beispielsweise kann eine Krümmung davon entlang seiner Erstreckung vorgesehen sein, insbesondere in Längsrichtung der Lenksäule. Des Weiteren versteht es sich, dass in einer Variante davon auch wenigstens zwei derartige Durchbrechungen in der Lenksäule vorgesehen sein könnten, welche dann zunächst einmal eine grobe Einstellung ihrer Position entlang ihrer Längsachse oder ihres Winkels um die Längsachse ermöglichen würden und anschließend eine feinere Einstellung des entsprechenden Freiheitsgrads. Hierdurch kann auf übermäßig große Durchbrechungen verzichtet werden, die unter Umständen die mechanische Festigkeit der Lenksäule beeinträchtigen könnten, während jedoch trotzdem ein großer Einstellungsbereich der Position des Lenkrads bewerkstelligt werden kann.

Weiterhin kann die erfindungsgemäße Lenksäulen-Anordnung ein Paar von Schalenelementen umfassen, welche in montiertem Zustand der Lenksäulen-Anordnung zwischen dem Lagerbock und der Lenksäule vorgesehen sind, wobei ihre Innenform im Wesentlichen der Querschnittsform der Lenksäule entspricht. In einer solchen Ausführungsform wirkt die Klemmkraft der Spannvorrichtung dann indirekt von dem Lagerbock über die Schalenelemente auf die Lenksäule. Alternativ könnte selbstverständlich auch die Innenform des Lagerbocks dementsprechend ausgebildet sein, die Lenksäule direkt zu führen, dies würde jedoch unter Umständen ein Montieren der erfindungsgemäßen Anordnung erschweren, da dann ein Einlegen der Lenksäule in den Lagerbock an ihre letztendliche Position lediglich noch entlang ihrer Längsachse möglich wäre, während durch den Einsatz der Schalenelemente der Lagerbock derart gestaltet werden kann, dass die aus den Schalenelementen und der Lenksäule gebildete Baugruppe als Ganzes auch von einer Seite her in den Lagerbock einführbar ist.

Hierbei können die Schalenelemente dann insbesondere an ihrer Innenseite und/oder an ihrer Außenseite mit einem rutschhemmenden Material versehen sein, um die Übertragung der Klemmkraft zu befördern und ein Abgleiten der entsprechenden Komponente zu verhindern, wobei insbesondere ein thermoplastisches Elastomer zum Einsatz kommen kann.

Ein weiterer Freiheitsgrad zur Einstellung der Position des Lenkrads wird erzielt, indem der Lagerbock und/oder die Schalenelemente derart ausgebildet sind, dass in einem gelösten Zustand der Spannvorrichtung eine Rotation der Lenksäule um den Lagerbolzen ermöglicht ist. Somit sind dann jeweilige Rotationen der Lenksäule um zwei im Wesentlichen orthogonal zueinander orientierte Raumachsen möglich, sodass im Fall des zusätzlichen Vorsehens der Möglichkeit einer Verlagerbarkeit der Lenksäule entlang ihrer Längsachse eine praktisch unbegrenzte Einstellung der Position des Lenkrads im Raum möglich ist.

In einer besonders einfach zu bedienenden Ausführungsform kann die Spannvorrichtung einen Klemmhebel umfassen, welcher es einem Bediener ermöglicht, eine ausreichend hohe Klemmkraft auf den Lagerbock auszuüben, um eine sichere Fixierung der Lenksäule und damit des Lenkrads in der gewünschten Ausrichtung hervorzurufen. Andererseits könnten selbstverständlich auch andere Spannvorrichtungen zum Einsatz kommen, beispielsweise unter dem Einsatz von Verschraubungen oder Ähnlichem.

Indem die Fixiermittel des Lagerbolzens als an beiden Enden davon anbringbare Verdrehspanner ausgebildet sind, welche dazu eingerichtet sind, mit dem eben beschriebenen Klemmhebel der Spannvorrichtung zusammenzuwirken, kann ferner die Funktion dieser beiden Komponenten der erfindungsgemäßen Anordnung kombiniert werden, sodass eine besonders einfache und kompakt aufgebaute Fixierung des Lagerbolzens sowie Verklemmung der Lenksäule in dem Lagerbock erzielt wird.

Erfindungsgemäß kann ferner wenigstens eines aus den Schalenelementen, dem Klemmhebel, dem Lagerbolzen und/oder der Verdrehspanner als Spritzgussteil gebildet sein, sodass hier eine erhebliche Kostenersparnis gegenüber den oben beschriebenen Schweißbaugruppen aus dem Stand der Technik erzielt werden kann.

Wie bereits weiter oben ebenfalls angedeutet, betrifft die vorliegende Erfindung weiterhin ein Fahrzeug, insbesondere ein Flurförderzeug, umfassend eine Lenksäulen-Anordnung nach einem der vorhergehenden Ansprüche.

Weitere Merkmale und Vorteile der vorliegenden Erfindung werden aus der nachfolgenden Beschreibung einer Ausführungsform davon deutlich, wenn diese gemeinsam mit den beiliegenden Figuren betrachtet wird. Diese zeigen im Einzelnen:
- Fig. 1: eine erfindungsgemäße Lenksäulen-Anordnung in einer isometrischen Explosionsansicht;
- Fig. 2: die Anordnung aus Figur 1 in einem montierten Zustand in isometrischer Ansicht;
- Fig. 3: eine Querschnittsansicht der Anordnung aus Figur 2 im Bereich des Lagerbocks; und
- Fig. 4: eine schematische Detailansicht der Lenksäule im Bereich ihrer Durchbrechung.

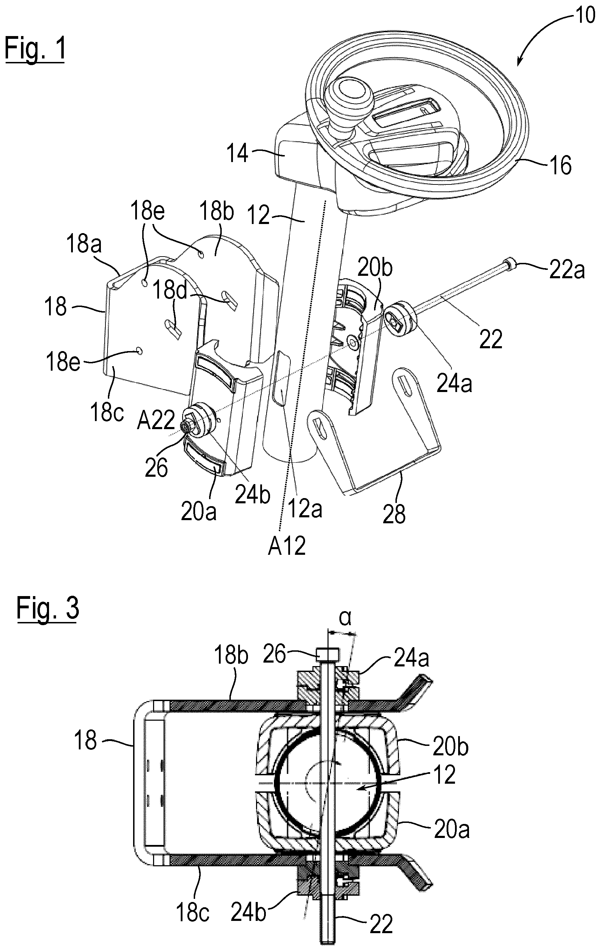

In Figur 1 ist zunächst eine erfindungsgemäße Lenksäulenanordnung in einer isometrischen Explosionsansicht gezeigt und ganz allgemein mit dem Bezugszeichen 10 bezeichnet. Die Lenksäulen-Anordnung 10 umfasst hierbei eine Lenksäule 12 mit einem im Wesentlichen kreisförmigen Querschnitt und einer durch den gesamten Querschnitt verlaufenden Durchbrechung 12a mit einem im Wesentlichen rechteckigen Umriss. Hierbei erstreckt sich die Durchbrechung 12a sowohl entlang der Längsachse A12 der Lenksäule 12, als auch entlang der Umfangsrichtung davon. An der Oberseite der Lenksäule 12 ist ferner ein Vorbau 14 vorgesehen, welcher ein Lenkrad 16 in einer für Flurförderzeuge üblichen Bauart trägt.

Des Weiteren umfasst die Lenksäulen-Anordnung 10 einen Lagerbock 18, welcher dazu vorgesehen ist, die Lenksäule 12 mit dem Fahrzeugkörper des nicht weiter dargestellten Fahrzeugs zu koppeln, wobei der Lagerbock 18 aus einer Grundplatte 18a und zwei sich von der Grundplatte 18a erstreckenden Seitenflächen 18b und 18c besteht. Hierbei sind in den beiden Seitenflächen 18b und 18c einander gegenüberliegend paarweise Durchbrechungen 18d und 18e vorgesehen.

Weiterhin umfasst die Lenksäulen-Anordnung 10 ein Paar von Schalenelementen 20a und 20b, welche in ihrer Außenform auf die Innenform der beiden Seitenelemente 18b und 18c des Lagerbocks 18 abgestimmt sind, während ihre Innenform im Wesentlichen den kreisförmigen Querschnitt der Lenksäule 12 nachbildet. Um ein unerwünschtes Abgleiten der Schalenelemente 20a und 20b an dem Lagerbock 18 oder der Lenksäule 12 zu verhindern, können diese jeweils an ihrer Innenseite und/oder an ihrer Außenseite mit einem rutschhemmenden Material versehen sein, beispielsweise einem thermoplastischen Elastomer.

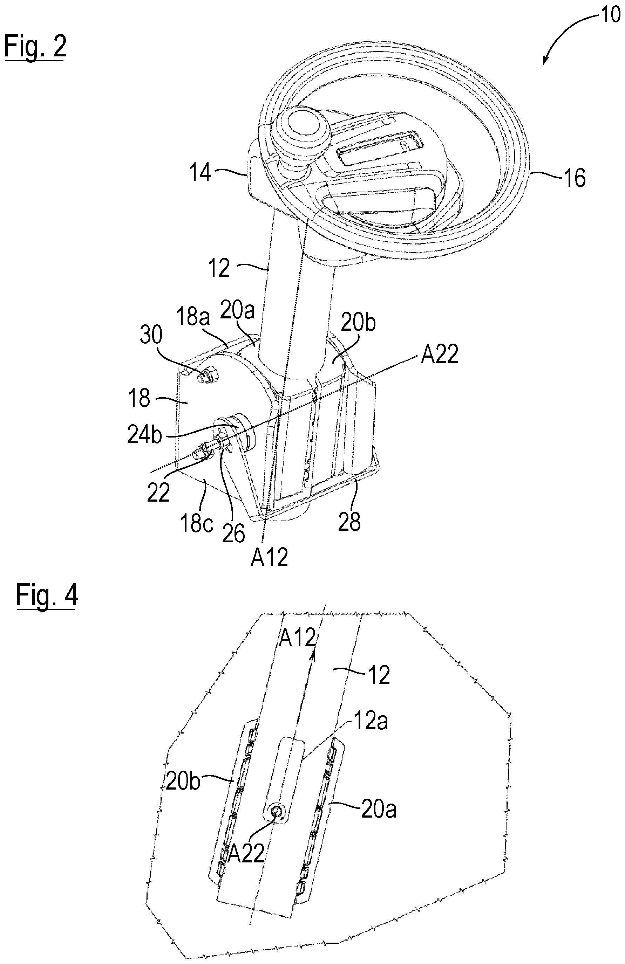

Zusätzlich unter Verweis auf die Figur 2, in welcher die Anordnung aus Figur 1 in montiertem Zustand ebenfalls in isometrischer Ansicht dargestellt hat, ist ferner ein Lagerbolzen 22 vorgesehen, welcher sich in dem montierten Zustand aus Figur 2 sowohl durch die Durchbrechung 12a der Lenksäule 12 als auch durch das Paar von Durchbrechungen 18d in den beiden Seitenwänden 18b und 18c des Lagerbocks 18 erstreckt.

Hierbei ist an den beiden Enden des Lagerbolzens 22 in dem in Figur 2 gezeigten montierten Zustand jeweils ein Verdrehspanner 24a bzw. 24b aufgeschoben, welcher einerseits dazu dient, zusammen mit dem Kopf 22a des Lagerbolzens 22 bzw. einer darauf aufgeschraubten Mutter 26 den Lagerbolzen 22 in der gezeigten Position zu fixieren, während der zwischen dem Kopf 22a und dem Verdrehspanner 24a bzw. der Mutter 26 und dem Verdrehspanner 24b vorgesehene Klemmhebel 28 mit den beiden Verdrehspannern 24a und 24b derart zusammenwirken kann, dass durch ein Nachuntendrücken des Klemmhebels 28 die beiden Seitenwände 18a und 18c des Lagerbocks nach innen gedrückt werden und somit über die beiden Schalenelemente 20a und 20b eine Klemmkraft auf die Lenksäule 12 ausgeübt wird, die diese in der entsprechenden Position festsetzt. Demhingegen kann durch ein Nachobendrücken des Klemmhebels 28 die von den Seitenwänden 18a und 18b auf die Lenksäule 12 wirkende Klemmkraft soweit verringert werden, dass ein Verlagern davon gegenüber dem Lagerbock 18 in einem durch die Ausmaße der Durchbrechung 12a vorgegebenen Rahmen und ein darauf folgendes erneutes Festsetzen davon ermöglicht wird, um eine Anpassung der Position des Lenkrads 16 vorzunehmen.

Lediglich der Vollständigkeit halber sei ferner noch auf die beiden Schrauben-Mutter-Kombinationen 30 verwiesen, welche in dem montierten Zustand aus Figur 2 durch die weiteren Durchbrechungen 18e in den Seitenwänden 18b und 18c des Lagerbocks 18 eingeschraubt sind, um dort eine vordefinierte Grund-Klemmkraft auszuüben bzw. ein übermäßiges Auseinanderbiegen der beiden Seitenflächen 18b und 18c des Lagerbocks 18 zu verhindern.

In der Figur 3 ist nun ein Querschnitt durch die Anordnung 10 in dem in Figur 2 gezeigten montierten Zustand dargestellt, aus welchem sich die Freiheitsgrade zur Verlagerung der Lenksäule 12 gegenüber dem Lagerbock 18 erkennen lassen. Einerseits ist selbstverständlich eine Verlagerung der Lenksäule 12 entlang ihrer Längsachse A12 möglich, d. h. in Figur 3 in die Zeichenebene hinein bzw. aus ihr heraus, um damit die Höhenposition des Lenkrads 16 entlang der Richtung A12 einzustellen, wie insbesondere aus Figur 4 noch besser ersichtlich ist.

Des Weiteren ist jedoch ebenfalls eine Rotation der Lenksäule 12 um ihre Längsachse A12 um den in Figur 3 angedeuteten Winkel α möglich, da die Durchbrechung 12a der Lenksäule 12 in Umfangsrichtung davon eine größere Abmessung aufweist als der Durchmesser des Lagerbolzens 22 in dem Bereich, in welchem er in der Durchbrechung 12a einliegt. Aufgrund dessen, dass das Lenkrad 16 nicht direkt konzentrisch mit dem kreisförmigen Umfang der Lenksäule 12 ausgerichtet ist, sondern über den Vorbau 14 von der als Rotationsachse dienenden Mittel-Längsachse A12 der Lenksäule beabstandet ist, kann somit durch diese Rotationsbewegung eine Verlagerung des Lenkrads auf einer kreisförmigen Bahn um die Achse A12 herum erzielt werden, was einen weiteren Freiheitsgrad für die Einstellung der Position des Lenkrads 16 darstellt.

Zuletzt ist in Figur 4 ebenfalls noch angedeutet, dass eine Rotation der Lenksäule 12 um die durch die Lagerbolzen 22 definierte Achse A22 möglich ist, wodurch ein Kippen des Lenkrads 14 nach schräg vorne ermöglicht wird. Bei einer derartigen Schwenkbewegung um die Achse A22 bewegen sich die beiden Schalenelemente 20a und 20b gemeinsam mit der Lenksäule 12 innerhalb der beiden Seitenwände 18b und 18c des Lagerbocks 18, während sie bei einer Verlagerung der Lenksäule 12 entlang ihrer Längsachse A12 oder auch bei einer Rotation der Lenksäule 12 um diese Achse ortsfest gegenüber dem Lagerbock 18 verbleiben.

Somit wird durch die erfindungsgemäße Ausgestaltung dieser Lenksäulen-Anordnung eine Verlagerung des Lenkrads 16 gegenüber dem Lagerbock 18 und damit auch dem Fahrzeugkörper des nicht dargestellten Fahrzeugs gemäß dreier Freiheitsgrade ermöglicht, was im Vergleich zu aus dem Stand der Technik bekannten Lenksäulenanordnungen eine wesentlich verbesserte Ergonomie für den Fahrer des entsprechenden Fahrzeugs erzielen kann. Indem ferner die Schalenelemente 20a und 20b, der Klemmhebel 28, der Lagerbolzen 22 und/oder die Verdrehspanner 24a und 24b als Spritzgussteile hergestellt werden können, stellt sich ferner eine deutliche Kostenreduzierung gegenüber aus dem Stand der Technik bekannten Lenksäulen-Anordnungen ein, die in der Regel als Schweißbaugruppen gefertigt waren.

## Patentansprüche

1. Lenksäulen-Anordnung (10) für ein Fahrzeug, insbesondere ein Flurförderzeug, umfassend:
- eine Lenksäule (12) mit einem daran vorgesehenen Lenkrad (16), welche einen im Wesentlichen kreisförmigen Querschnitt und wenigstens eine durch den gesamten Querschnitt verlaufende Durchbrechung (12a) aufweist;
- einen Lagerbock (18) zur Anbindung der Lenksäule (12) an den Fahrzeugkörper des Fahrzeugs, welcher zwei einander gegenüberliegende Durchbrechungen (18d) aufweist;
- einen Lagerbolzen (22), welcher in einem montierten Zustand der Lenksäulen-Anordnung (10) durch die Durchbrechungen (18) des Lagerbocks und die Durchbrechung (12a) der Lenksäule (12) hindurchgeführt und mittels Fixiermitteln (24a, 24b) festgesetzt ist; und
- eine Spannvorrichtung (24a, 24b, 26, 28), welche dazu eingerichtet und angeordnet ist, in einem angezogenen Zustand eine Klemmkraft durch den Lagerbock (18) auf die Lenksäule (12) hervorzurufen;
wobei die Durchbrechung (12a) der Lenksäule (12) in Umfangsrichtung davon eine größere Abmessung aufweist als der Durchmesser des Lagerbolzens (22) in dem Bereich, in welchem er in montiertem Zustand in der Durchbrechung (12a) der Lenksäule (12) einliegt,
**dadurch gekennzeichnet, dass** der Lagerbock (18) und/oder die Schalenelemente (20a, 20b) derart ausgebildet sind, dass in einem gelösten Zustand der Spannvorrichtung (24a, 24b, 26, 28) eine Rotation der Lenksäule (12) um den Lagerbolzen (22) ermöglicht ist.

2. Lenksäulen-Anordnung (10) nach Anspruch 1, wobei an der Oberseite der Lenksäule (12) ferner ein Vorbau (14) vorgesehen ist, welcher das Lenkrad (16) in einer von einer Längsachse (A12) der Lenksäule (12) versetzten Weise trägt

3. Lenksäulen-Anordnung (10) nach Anspruch 1 oder 2,
wobei die Durchbrechung (12a) der Lenksäule (12) in Längsrichtung (A12) davon eine größere Abmessung aufweist als der Durchmesser des Lagerbolzens (22) in dem Bereich, in welchem er in montiertem Zustand in der Durchbrechung (12a) der Lenksäule (12) einliegt.

4. Lenksäulen-Anordnung (10) nach einem der vorhergehenden Ansprüche,
ferner umfassend ein Paar von Schalenelementen (20a, 20b), welche in montiertem Zustand der Lenksäulen-Anordnung (10) zwischen dem Lagerbock (18) und der Lenksäule (12) vorgesehen sind, wobei ihre Innenform im Wesentlichen der Querschnittsform der Lenksäule (12) entspricht.

5. Lenksäulen-Anordnung (10) nach Anspruch 4,
wobei die Schalenelemente (20a, 20b) an ihrer Innenseite und/oder an ihrer Außenseite mit einem rutschhemmenden Material, beispielsweise einem thermoplastischen Elastomer, versehen sind.

6. Lenksäulen-Anordnung (10) nach einem der vorhergehenden Ansprüche, wobei die Spannvorrichtung (24a, 24b, 26, 28) einen Klemmhebel (28) umfasst.

7. Lenksäulen-Anordnung (10) nach Anspruch 6,
wobei die Fixiermittel (24a, 24b) des Lagerbolzens (22) als an beiden Enden davon anbringbare Verdrehspanner (24a, 24b) ausgebildet sind, welche dazu eingerichtet sind, mit dem Klemmhebel (28) der Spannvorrichtung zusammenzuwirken.

8. Lenksäulen-Anordnung (10) nach einem der vorhergehenden Ansprüche,
wobei die Schalenelemente (20a, 20b), der Klemmhebel (28), der Lagerbolzen (22) und/oder die Verdrehspanner (24a, 24b) als Spritzgussteile gebildet ist/sind.

9. Fahrzeug, insbesondere Flurförderzeug, umfassend eine Lenksäulen-Anordnung (10) nach einem der vorhergehenden Ansprüche.

## Claims

1. Steering column assembly (10) for a vehicle, in particular an industrial truck, comprising:
- a steering column (12) having a steering wheel (16) provided thereon, which column has a substantially circular cross section and at least one aperture (12a) extending through the entire cross section;
- a bearing block (18) for connecting the steering column (12) to the vehicle body of the vehicle, which bearing block comprises two apertures (18d) which are opposite one another;
- a bearing bolt (22) which, in a mounted state of the steering column assembly (10), is guided through the apertures (18) of the bearing block and the aperture (12a) of the steering column (12) and is fixed by fixing means (24a, 24b); and
- a clamping device (24a, 24b, 26, 28) which is designed and arranged, in a tightened state, to bring about a clamping force on the steering column (12) by means of the bearing block (18);
the aperture (12a) of the steering column (12) having a larger dimension in the peripheral direction thereof than the diameter of the bearing bolt (22) in the region in which it rests in the aperture (12a) of the steering column (12) in the mounted state,
**characterised in that** the bearing block (18) and/or the shell elements (20a, 20b) are designed in such a way that a rotation of the steering column (12) about the bearing bolt (22) is made possible in a released state of the clamping device (24a, 24b, 26, 28).

2. Steering column assembly (10) according to claim 1, wherein a stem (14) is furthermore provided on the upper side of the steering column (12), which stem carries the steering wheel (16) in a manner offset from a longitudinal axis (A12) of the steering column (12).

3. Steering column assembly (10) according to either claim 1 or claim 2,
wherein the aperture (12a) of the steering column (12) has a larger dimension in the longitudinal direction (A12) thereof than the diameter of the bearing bolt (22) in the region in which it rests in the aperture (12a) of the steering column (12) in the mounted state.

4. Steering column assembly (10) according to any of the preceding claims,
further comprising a pair of shell elements (20a, 20b) which, in the mounted state of the steering column assembly (10), are provided between the bearing block (18) and the steering column (12), wherein the internal shape of said shell elements substantially corresponds to the cross-sectional shape of the steering column (12).

5. Steering column assembly (10) according to claim 4,
wherein the shell elements (20a, 20b) are provided on their inside and/or on their outside with an anti-slip material, for example a thermoplastic elastomer.

6. Steering column assembly (10) according to any of the preceding claims, wherein the clamping device (24a, 24b, 26, 28) comprises a clamping lever (28).

7. Steering column assembly (10) according to claim 6,
wherein the fixing means (24a, 24b) of the bearing bolt (22) is designed as torque wrenches (24a, 24b) which can be applied to both ends of said bearing bolt and which are designed to interact with the clamping lever (28) of the clamping device.

8. Steering column assembly (10) according to any of the preceding claims,
wherein the shell elements (20a, 20b), the clamping lever (28), the bearing bolt (22), and/or the torque wrenches (24a, 24b) is/are formed as injection-moulded parts.

9. Vehicle, in particular industrial truck, comprising a steering column assembly (10) according to any of the preceding claims.

## Revendications

1. Agencement de colonne de direction (10) pour un véhicule, en particulier un chariot de manutention, comprenant :
- une colonne de direction (12) avec un volant de direction (16) prévu sur celle-ci, qui présente une section transversale sensiblement circulaire et au moins une traversée (12a) s'étendant à travers toute la section transversale ;
- un bloc de support (18) pour relier la colonne de direction (12) à la carrosserie du véhicule, qui présente deux traversées (18d) opposées l'une à l'autre ;
- un pivot (22) qui, à l'état monté de l'agencement de colonne de direction (10), passe à travers les traversées (18) du bloc de support et à travers la traversée (12a) de la colonne de direction (12) et qui est fixé à l'aide de moyens de fixation (24a, 24b) ; et
- un dispositif de serrage (24a, 24b, 26, 28) qui est conçu et disposé de manière à provoquer, dans un état serré, une force de serrage sur la colonne de direction (12) à travers le bloc de support (18) ;
dans lequel la traversée (12a) de la colonne de direction (12) présente, dans la direction circonférentielle de celle-ci, une dimension supérieure à celle du diamètre du pivot (22) dans la zone dans laquelle il est logé dans la traversée (12a) de la colonne de direction (12) à l'état monté,
**caractérisé en ce que**
le bloc de support (18) et/ou les éléments de coque (20a, 20b) sont conçus de telle sorte que, dans un état desserré du dispositif de serrage (24a, 24b, 26, 28), une rotation de la colonne de direction (12) autour du pivot (22) est possible.

2. Agencement de colonne de direction (10) selon la revendication 1,
dans lequel il est en outre prévu, sur le côté supérieur de la colonne de direction (12), une potence (14) qui supporte le volant de direction (16) d'une manière décalée par rapport à un axe longitudinal (A12) de la colonne de direction (12).

3. Agencement de colonne de direction (10) selon la revendication 1 ou 2, dans lequel la traversée (12a) de la colonne de direction (12) présente, dans la direction longitudinale (A12) de celle-ci, une dimension supérieure à celle du diamètre du pivot (22) dans la zone dans laquelle il est logé dans la traversée (12a) de la colonne de direction (12) à l'état monté.

4. Agencement de colonne de direction (10) selon l'une des revendications précédentes,
comprenant en outre une paire d'éléments de coque (20a, 20b) qui, à l'état monté de l'agencement de colonne de direction (10), sont prévus entre le bloc de support (18) et la colonne de direction (12), leur forme intérieure correspondant sensiblement à la forme de la section transversale de la colonne de direction (12).

5. Agencement de colonne de direction (10) selon la revendication 4,
dans lequel les éléments de coque (20a, 20b) sont pourvus sur leur face intérieure et/ou sur leur face extérieure d'un matériau antidérapant, par exemple d'un élastomère thermoplastique.

6. Agencement de colonne de direction (10) selon l'une des revendications précédentes,
dans lequel le dispositif de serrage (24a, 24b, 26, 28) comprend un levier de serrage (28).

7. Agencement de colonne de direction (10) selon la revendication 6,
dans lequel les moyens de fixation (24a, 24b) du pivot (22) sont réalisés sous forme de tendeurs rotatifs (24a, 24b) pouvant être montés aux deux extrémités dudit pivot et sont conçus pour coopérer avec le levier de serrage (28) du dispositif de serrage.

8. Agencement de colonne de direction (10) selon l'une des revendications précédentes,
dans lequel les éléments de coque (20a, 20b), le levier de serrage (28), le pivot (22) et/ou les tendeurs rotatifs (24a, 24b) sont réalisés sous forme de pièces coulées par injection.

9. Véhicule, en particulier chariot de manutention, comprenant un agencement de colonne de direction (10) selon l'une des revendications précédentes.
